# EUROPEAN PATENT APPLICATION

(11) **EP 2 127 868 A2**
(43) Date of publication of application: **02.12.2009**
(21) Application number: 09161102.0
(22) Date of filing: 26.05.2009
(51) Int. Cl.: B32B 37/22, B32B 41/00

(54) **Laminator**

(30) Priority: 27.05.2008 JP 2008137438
(71) Applicant: Fujipla Inc., Tokyo 104-0061 (JP)
(72) Inventor: Takeda, Hideyuki, Tokyo 145-0075 (JP); Kawashima, Noriyuki, Ageo-shi, Saitama-ken 362-0045 (JP)
(74) Representative: Charrier, Rapp & Liebau

(57) **Abstract**

A laminator provided with a means (2) for feeding a planar object to be laminated (7), a rotary lamination film supplier (3) wound up with a lamination film (8) to be adhered on the surfaces of the planar object to be laminated (7) and a mean (4) for heating and pressing the lamination film (8) on the planar object to be laminated (7), wherein :
an ID tag (61) is applied on a shaft-end of the rotary lamination film supplier (3), the ID tag (61) is registered a piece of information (S1) which is inherent to the lamination film (8) wound on said lamination film supplier (3), a wireless signal communication means (62) is arranged to face the ID tag (61)
for allowing wireless signal communication with the ID tag (61), the wireless signal communication means (62) is connected with a regulation means (63).

## Description

### FIELD OF THE INVENTION

This invention relates to an improvement applicable to a laminator or a laminating machine employable for production of a laminated object that is a planar object having one or both surfaces covered by a film of a high polymer or the like.

### BACKGROUND OF THE INVENTION

A laminator or a laminating machine having a function to cover one or both surfaces of a planar object e.g. a sheet of paper, a plate or the like, is widely known.

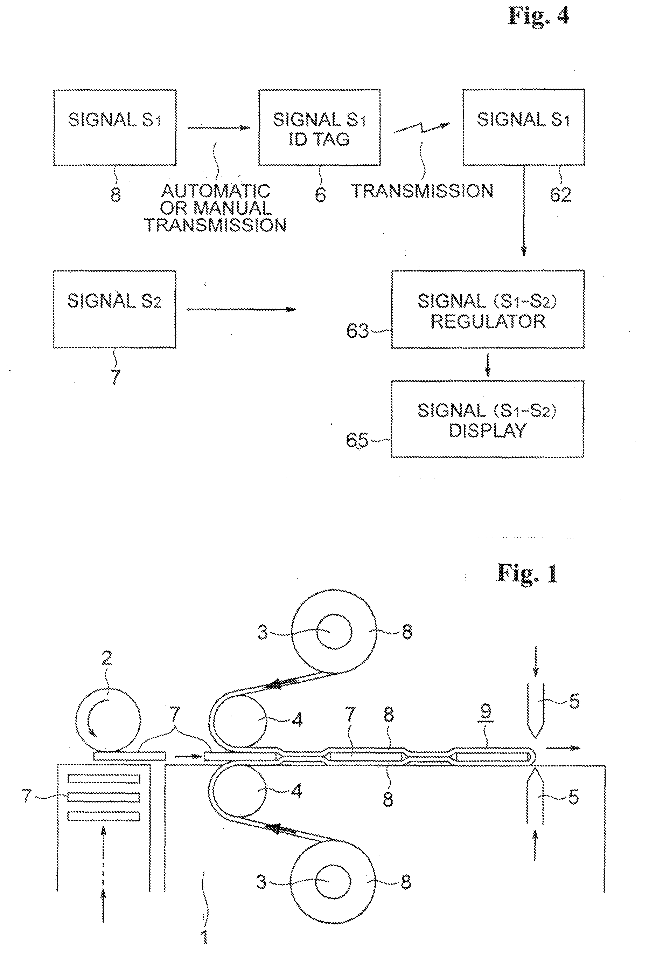

Fig. 1 shows a front view of an exemplary laminator available in the prior art. In the drawing, a table 1 allows objects to be laminated 7 to proceed thereon in the direction of an arrow. 2 is a rotary feeder having a function to feed the foregoing objects to be laminated 7 one by one along the surface of the table 1. A shaft 3 is a means for storing and supplying a lamination film 8 to be laminated on each object to be laminated 7. Rotary members 4 are means for heating and pressing the lamination films 8 that are scheduled to be laminated along the planar objects to be laminated 7. 5 is a cutter to separate each laminated planar object or each finished lamination of the planar object to be laminated 7covered by the film 8.

The foregoing lamination film 8 is generally identified as a continuous film applied adhesives thereon, and wound around a shaft 3. The adhesives are heated and softened to be allowed to act as an adhesive for adhering the lamination film 8 on the surface of the planar object to be laminated 7.

The lamination film 8 includes various classes or kinds different from one another, including transparent ones or translucent ones, lustrous or lusterless ones and the like. In comparison with the planar objects to be laminated 7 which are generally flat plates, various shapes are allowed for the lamination films 8, including thick ones, thin ones or the like. In addition, the selection of the softening temperature degree of the adhesive is extremely important and the nature thereof is delicate. When it comes to selection of a lamination film and a planar object to be laminated, the inherent nature of the objects to be laminated must be taken into consideration. Namely, various parameters must be taken into consideration, when a lamination schedule is planed, prior to starting operation of a lamination process.

Therefore, there are a number of items to be considered and selected, before a laminating operation is actually started.

In the foregoing procedure for selection of a lamination film 8 and a planar object to be laminated 7, the planar object to be laminated 7 is allowed to be freely selected. On the other hand, we often see cases wherein the selection of the lamination film is fairly restrictive. We may often see requirements wherein the lamination film is automatically selected, following the nature of the planar object to be laminated.

Therefore, we see much possibility to utilize the foregoing nature, for the purpose to improve the method for selection of the planar objects to be laminated and the lamination film.

By the way, a tendency is recognized that the lamination film that was used in a previous operation remains un-removed, after the completion of the previous operation. This is because no one knows the lamination film that will be employed for the next operation.

Therefore, prior to starting the next operation, it is necessary by all means to confirm that a lamination film that is pertinent for the next operation or more specifically a lamination film that is pertinent for the nature of the planar object to be laminated in the next operation, is loaded on the laminating machine.

On the other hand, however, we do not find in the prior art, a laminating machine having a function to recognize the lamination film presently applied thereon. It is much more difficult to find a laminating machine having a function to inspect whether or not the lamination film presently applied thereon is acceptable by or pertinent for a planar object to be laminated in the next operation.

### DRAWBACKS REMOVED BY THIS INVENTION

The drawbacks to be removed by this invention are itemized below.

The first one is difficulty to identify the class and/or the characteristics of the lamination film presently applied on a laminating machine. In other words, the difficulty to learn the information inherent to the lamination film, such information is influential for selection of a planar object to be laminated that will be selected for the next operation.

The second one is difficulty to discover the identification (number) of a lamination film that will be pertinent for the planar object to be laminated. In other words, the difficulty to get a piece of information necessary to look for a good combination of a lamination film and a planar object to be laminated. More specifically, the difficulty to find the identification (number) of a lamination film that is pertinent to be combined with a f planar object to be laminated.

Thus, the first object of this invention is to recognize the identification (number), the class, or the nature including the desirable temperature, pressure et al. for adhesion of the lamination film presently applied on a laminating machine and to indicate the information on a display.

The second object of this invention is to recognize the identification (number) of the lamination film pertinent or suitable for the planar object to be laminated that will be operated in the next operation and indicate the information on a display.

### SUMMARY OF THE INVENTION

The conceptual structure of the first phase of this invention is a laminator provided with a means (2) for feeding a planar object to be laminated (7), at least a rotary lamination film supplier (3) wound up with a lamination film (8) to be adhered on one or both surfaces of the planar object to be laminated (7) and at least a mean (4) for heating and pressing said lamination film (8) on said planar object to be laminated (7), wherein an ID tag (61) is applied on a shaft-end of said rotary lamination film supplier (3), said ID tag (61) is, by using either manual means or an automatic regulation means, registered at least a piece of information (S1) which is inherent to said lamination film (8) wound on said lamination film supplier (3), a wireless signal communication means (62) is arranged to face said ID tag (61) for allowing wireless signal communication with said ID tag (61), said wireless signal communication means (62) is connected with a regulation means (63), said regulation means (63) is by using either manual means or an automatic regulation means registered with at least a piece of information (S2) inherent to said object to be laminated (7), said regulation means (63) further applied with a micro-computer (64) for allowing comparison of said information (S1) inherent to said lamination film (8) wound on said lamination film supplier (3) and said information (S2) inherent to said object to be laminated (7), and said micro-computer (64) being allowed to output the results of said comparison activities toward said regulation means (63) to allow said regulation means (63) to display said results of said comparison activities on a display means (65).

Said information (S1) inherent to said lamination film (8) wound on said lamination film supplier (3) includes at least the information indicating the class and identification (the number) of said lamination film (8), the information indicating the temperature (T8) pertinent for adhesion thereof and the operation speed (V8) pertinent for the laminating operation thereof.

The conceptual structure of the second phase of this invention is the foregoing laminator defined as the first phase of this invention, wherein said regulation means (63) has a function to look for a lamination film supplier (3) pertinent for said planar object to be laminated (7), in the case where said results of the comparison of said information (S1) inherent to said lamination film (8) wound on said lamination film supplier (3) and said information (S2) inherent to said object to be laminated (7) determine that said information (S1) and t said information (S2) can not be equivalent to each other, and a function to display said lamination film supplier (3) determined to be pertinent for said planar object to be laminated (7), on said display means (65).

By the foregoing activities, the operator can be suggested to replace said lamination film supplier (3).

The conceptual structure of the third phase of this invention is a laminator, wherein said regulation means (63) is further registered with at least some pieces of information relating to the temperature, pressure and the like appropriate for said lamination films (8) and for said objects to be laminated (7), whereby said laminator is allowed to use said micro-computer (64) to obtain information effective to help an operator of said laminator.

### BRIEF DESCRIPTIONOF THE DRAWINGS

Fig. 1 is a front view of a laminator available in the prior art.
Fig. 2 is a side view of the essential components of a laminator in accordance with this invention.
Fig. 3 is a front view of a laminator in accordance with this invention.
Fig. 4 is a sketch showing the systems of signal transmission and calculation conducted by this invention.

### DETAILED DESCRIPTION OF

### THE PREFERRED EMBODIMENTS

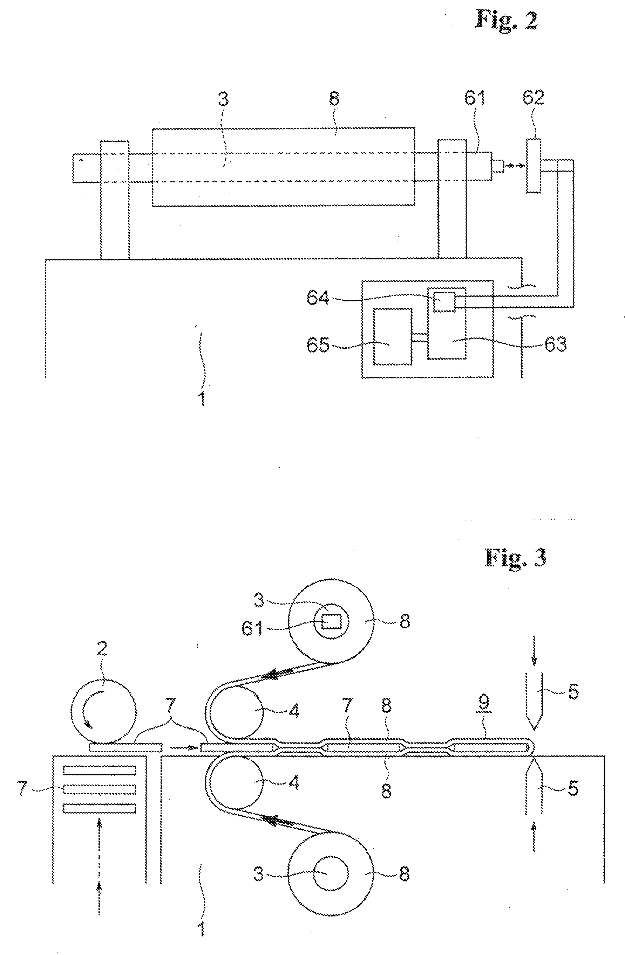

Figs. 2 and 3 respectively show a side view of the essential part (A planer object to be laminated 7 is not shown.) and a front view of the first, second or third embodiment (2 sets of means 4 for heating and pressing the lamination films 8 are shown.) of a laminator in accordance with this invention.

### First Embodiment

Figs. 2 and 3 respectively show a side view of the essential part (A planer object to be laminated 7 is not shown.) and a front view of the first, second or third embodiment (2 sets of means 4 for heating and pressing the lamination films 8 are shown.) of a laminator in accordance with this invention.

Most members shown in Figs. 2 and 3 are identical to those shown in Fig. 1. Namely, 1 is a table which allows planar objects to be laminated 7 to proceed thereon in the direction of an arrow. 2 is a rotary feeder having a function to feed the planar objects to be laminated 7 one by one along the surface of the table 1. A shaft 3 is a means for storing and supplying a lamination film 8 to be laminated on the planar objects to be laminated 7. Rotary members 4 are means for heating and pressing the lamination films 8 that are scheduled to be laminated along the planar objects to be laminated 7. 5 is a cutter to separate each finished laminated planar object 9 or each finished lamination 9 of the planar object to be laminated 7covered by the lamination film 8, after they are heated and pressed.

The members essential for this invention and the activities are written as follows.
(1) An ID tag 61 is applied on a shaft-end of the lamination film supplier 3 around which the lamination film 8 is wound, and the ID tag 61 is registered at least a piece of information S1 which is inherent to the lamination film 8 which is wound around the lamination film supplier 3. The information S1 can be registered therein by using either manual means or some automatic regulation means known in the prior art.
(2) The information S1 inherent to the lamination film 8 includes at least the information indicating the class and identification (the number) of the lamination film 8, the information indicating the temperature T8 pertinent for adhesion of the lamination film 8 and the operation speed V8 pertinent for the laminating operation which is conducted by using the materials.
(3) A wireless signal communication means 62 is arranged to face the ID tag 61 for allowing wireless signal communication with the ID tag 61. The wireless signal communication means 62 is further connected a regulation means 63.
(4) The regulation means 63 is registered at least a piece of information S2 inherent to the planar object to be laminated 7.

Since the regulation means 63 is further applied a micro-computer 64 and a display means 65, the micro-computer 64 is allowed calculation using the foregoing pieces of information including S1, S2 and the other pieces of information and the results of the calculation are allowed to be displayed by using the display means 65.

Referring to Fig. 4, a sketch showing the systems of signal transmission and calculation conducted by this invention. Namely, a subtraction is conducted for S1 and S2. The results of the calculation are displayed on the display means 65. If the display means 65 shows zero, the selection can be interpreted as a success or a normal position.

In this manner, the object of the first idea of this invention is realized.

### Second Embodiment

In the case where the micro-computer 64 reached a result that the foregoing pieces of information S1 and S2 can not go together, the micro-computer 64 is designed to look for the other lamination film 8 or the other lamination film supplier 3 which can go together with the already selected planar object to be laminated 7, and is designed to display the indication or the number of the resultant lamination film 8 or the resultant lamination film supplier 3 on the display means 65.

Following the display, the operator is allowed to change the lamination film 8 or the lamination film supplier 3 to the newly discovered lamination film 8 or the lamination film supplier 3 which is suitable to be employed with the planar object to be laminated 7 which was previously selected.

In this manner, the object of the second idea of this invention is realized.

### Third Embodiment

The laminator of this invention is allowed to design to include some other items e.g. temperature, pressure and the like as the parameters of regulation. In such a design, the items selected as the parameters can be registered in the regulation means 63. In this case, it is possible to utilize the fundamental design of this invention for the foregoing objects.

As a result, the object of the third idea of this invention can readily realized.

The foregoing description has clarified that this invention has successfully provided a laminator that successfully satisfy the objects of this invention.

## Claims

1. A laminator comprising:
a means (2) for feeding a planar object to be laminated (7),
at least a rotary lamination film supplier (3) wound up with a lamination film (8) to be adhered on one or both surfaces of said planar object to be laminated (7) and
at least a mean (4) for heating and pressing said lamination film (8) on said planar object to be laminated (7), wherein :
an ID tag (61) is applied on a shaft-end of said rotary lamination film supplier (3),
said ID tag (61) is, by using either manual means or an automatic regulation means, registered at least a piece of information (S1) which is inherent to said lamination film (8) wound on said lamination film supplier (3),
a wireless signal communication means (62) is arranged to face said ID tag (61) for allowing wireless signal communication with said ID tag (61),
said wireless signal communication means (62) is connected with a regulation means (63),
said regulation means (63) is by using either manual means or an automatic regulation means registered with at least a piece of information (S2) inherent to said object to be laminated (7),
said regulation means (63) is further applied with a micro-computer (64) for allowing comparison of said information (S1) inherent to said lamination film (8) wound on said lamination film supplier (3) and said information (S2) inherent to said object to be laminated (7), and said micro-computer (64)
being allowed to output the results of said comparison activities toward said regulation means (63) to allow said regulation means (63) to display said results of said comparison activities on a display means (65).

2. A laminator in accordance with claim 1, wherein:
said information (S1) inherent to said lamination film (8) wound on said lamination film supplier (3) includes at least the information indicating the class and identification (the number) of said lamination film (8), the information indicating the temperature (T8) pertinent for adhesion thereof and the operation speed (V8) pertinent for the laminating operation thereof.

3. A laminator in accordance with claim 1, wherein:
said regulation means (63) has a function to look for a lamination film supplier (3) pertinent for said planar object to be laminated (7), in the case where said results of the comparison of said information (S1) inherent to said lamination film (8) wound on said lamination film supplier (3) and said information (S2) inherent to said object to be laminated (7) determine that said information (S1) and t said information (S2) can not be equivalent to each other, and a function to display said lamination film supplier (3) determined to be pertinent for said planar object to be laminated (7), on said display means (65).

4. A laminator in accordance with claim 1, wherein:
said regulation means (63) is further registered with at least some pieces of information relating to the temperature, pressure and the like appropriate for said lamination films (8) and for said objects to be laminated (7), whereby said laminator is allowed to use said micro-computer (64) to obtain information effective to help an operator of said laminator.
